# FASCICULE DE BREVET EUROPEEN

(11) **EP 4 414 269 B1**
(45) Date de publication et mention de la délivrance du brevet: **30.04.2025**
(21) Numéro de dépôt: 23218441.6
(22) Date de dépôt: 20.12.2023
(51) Int. Cl.: B64D 27/24, B64D 31/06, B64F 5/60, B64C 27/00, B64D 27/02

(54) **PROCEDE DE TEST D'UNE INSTALLATION MOTRICE HYBRIDE EQUIPANT UN AERONEF, PROGRAMME D'ORDINATEUR ET AERONEF ASSOCIES**
VERFAHREN ZUM TESTEN EINER HYBRIDANTRIEBSANLAGE IN EINEM LUFTFAHRZEUG, ENTSPRECHENDES COMPUTERPROGRAMM UND ENTSPRECHENDES LUFTFAHRZEUG
METHOD FOR TESTING A HYBRID POWER PLANT PROVIDED ON AN AIRCRAFT, ASSOCIATED COMPUTER PROGRAM AND AIRCRAFT

(30) Priorité: 08.02.2023 FR 2301157
(43) Date de publication de la demande: 14.08.2024
(73) Titulaire: Airbus Helicopters, 13725 Marignane Cedex (FR)
(72) Inventeur: GAZZINO, Marc, 13012 MARSEILLE (FR); DUMUR, Guillaume, 13300 SALON DE PROVENCE (FR); LOGEAIS, Jean-François, 13009 MARSEILLE (FR); BOUDIER, Léonard, 13250 SAINT-CHAMAS (FR); JAMOT, Michel, 13100 AIX EN PROVENCE (FR); HENAFF, Mikaël, 13100 AIX EN PROVENCE (FR); CAMUS, Jérémy, 13820 ENSUES LA REDONNE (FR)
(74) Mandataire: GPI Brevets

(56) Documents cités:
- EP-A1- 3 865 677
- US-A1- 2014 117 148
- US-A1- 2015 176 488
- US-A1- 2020 331 621

## Description

La présente invention concerne un procédé de test d'une installation motrice hybride équipant un aéronef à voilure tournante. Une telle installation motrice hybride est munie d'au moins un moteur thermique et d'au moins un moteur électrique.

En particulier, un giravion peut être muni d'une telle installation motrice hybride pour mettre en rotation au moins un rotor de sustentation, éventuellement via au moins une boîte de transmission de puissance.

Un moteur électrique peut prendre la forme d'une machine électrique pouvant uniquement fonctionner en un mode moteur durant lequel cette machine électrique fournit une puissance mécanique, ou d'une machine électrique apte à fonctionner dans un tel mode moteur électrique et alternativement dans un mode générateur électrique durant lequel cette machine électrique génère et fournit une énergie électrique. Un tel moteur électrique est usuellement relié électriquement à une source d'énergie électrique. La source d'énergie électrique peut comporter une pluralité d'accumulateurs électriques disposés dans une ou des batteries électriques. Un accumulateur électrique est aussi parfois dénommé cellule.

Un moteur thermique est un moteur de type à combustion interne muni d'une chambre de combustion alimentée par un carburant et un comburant, tel que par exemple un turbomoteur ou un moteur à pistons.

Par exemple, un giravion peut comporter un moteur thermique et un moteur électrique aptes chacun à mettre en mouvement un rotor de sustentation. Le moteur électrique peut notamment avoir pour fonction d'apporter une puissance mécanique au rotor de sustentation en cas de panne du moteur thermique. Un tel giravion allie alors les avantages d'un giravion monomoteur, tout en présentant le niveau de sécurité d'un giravion bimoteur grâce à l'assistance apportée par le moteur électrique en cas de panne du moteur thermique. Le moteur électrique peut en effet apporter une puissance mécanique au rotor de sustentation, suite à la panne du moteur thermique, pour une durée de quelques minutes. Cet apport de puissance mécanique peut permettre au giravion d'atteindre une aire d'atterrissage sécurisée. Lors d'un vol au-dessus d'une ville, une telle installation motrice hybride peut accroître la sécurité des personnes en permettant éventuellement au giravion d'atteindre une aire d'atterrissage située en dehors de la ville par exemple.

L'utilisation d'un moteur électrique au sein d'une installation motrice d'un aéronef est donc intéressante, notamment pour optimiser la sécurité de l'aéronef en cas de panne d'un moteur thermique. Toutefois, ce moteur électrique nécessite l'emploi d'un réseau électrique relié électriquement au moteur électrique. Ce réseau électrique est notamment dimensionné pour apporter au moteur électrique la puissance électrique nécessaire afin que le moteur électrique fournisse la puissance mécanique souhaitée pour réaliser la mission prévue. Le réseau électrique d'un giravion à motorisation hybride est par exemple dimensionné pour que le moteur électrique fournisse une puissance mécanique prédéterminée pendant au minimum une durée prédéterminée en cas de panne d'un moteur thermique. Un tel réseau électrique est toutefois susceptible d'être déficient et de ne pas permettre au moteur électrique de remplir la fonction souhaitée.

Le document WO2020/156079 A1 décrit un procédé et un dispositif pour surveiller une batterie électrique d'un aéronef. Ce procédé comporte l'acquisition de valeurs de paramètres de performance de la batterie électrique, ces paramètres comprenant au moins un nombre de cycles de fonctionnement, la plus petite tension électrique aux bornes d'une cellule de la batterie électrique, et une différence entre des tensions électriques aux bornes des cellules de la batterie électrique. La différence entre des tensions électriques aux bornes des cellules de la batterie électrique est mesurée entre la tension électrique de la cellule de la batterie électrique présentant la plus grande tension électrique à ses bornes et la tension électrique de la cellule de la batterie électrique présentant la plus petite tension électrique à ses bornes.

Le procédé comporte une étape de détermination d'un identifiant d'état en fonction des valeurs des paramètres de performance, l'aéronef étant contrôlé en vol pour suivre une stratégie qui est fonction de cet identifiant d'état.

Le document WO2018/171495 décrit un système de gestion d'une batterie électrique. Une puce de gestion calcule des informations de santé d'un module de cellules de la batterie électrique en fonction de données d'intensité électrique, de tension électrique et de température.

Les documents US 2014/117148 A1, US 2020/331621 A1, EP 3865 677 A1, et US 2015/176488 A1 sont connus et éloignés de l'invention.

La présente invention a alors pour objet de proposer un procédé de test d'une installation motrice hybride visant à garantir la sûreté d'un vol réalisé par un aéronef équipé de cette installation motrice hybride. Plus précisément, l'invention permet de tester une disponibilité de la puissance mécanique apte à être fournie par un moteur électrique notamment pour pallier une panne d'un moteur thermique de l'installation motrice hybride.

L'invention se rapporte donc à un procédé de test d'une installation motrice hybride équipant un aéronef à voilure tournante comportant au moins un rotor de sustentation, l'installation motrice hybride étant configurée pour entraîner en rotation ledit au moins un rotor de sustentation, l'installation motrice hybride comportant :
- au moins un moteur thermique configuré pour entraîner en rotation ledit au moins un rotor de sustentation, et
- au moins un moteur électrique alimenté en énergie électrique par au moins une source d'alimentation électrique, ledit au moins un moteur électrique étant configuré pour entraîner en rotation ledit au moins un rotor de sustentation au moins lors d'une panne d'au moins un parmi ledit au moins un moteur thermique.

Selon l'invention, un tel procédé est remarquable en ce qu'il comporte un premier test effectué au sol comportant les étapes suivantes :
- démarrage dudit au moins un moteur thermique,
- commande d'une alimentation en carburant dudit au moins un moteur thermique, la commande de l'alimentation en carburant étant configurée pour qu'une vitesse de rotation NR dudit au moins un rotor de sustentation atteigne une première vitesse de seuil V1,
- lorsque la vitesse de rotation NR dudit au moins un rotor de sustentation est supérieure ou égale à la première vitesse de seuil V1, première commande d'une alimentation électrique dudit au moins un moteur électrique, la première commande de l'alimentation électrique étant configurée pour que la vitesse de rotation NR dudit au moins un rotor de sustentation atteigne une seconde vitesse de seuil V2 supérieure à la première vitesse de seuil V1, la première commande de l'alimentation électrique étant réalisée selon un profil de commande prédéterminé,
- détermination d'une première durée D1 mise par ledit au moins un rotor de sustentation pour passer de la première vitesse de seuil V1 à la seconde vitesse de seuil V2, et
- vérification que la première durée D1 est inférieure à une durée de seuil prédéterminée Ds.

Autrement dit, un tel premier test est réalisé avant le décollage de l'aéronef. Le moteur thermique peut être démarré par un pilote, un membre d'équipage ou un opérateur de maintenance par exemple en actionnant une commande de démarrage. Eventuellement, une autre commande peut ensuite être actionnée pour commander un mode de ralenti permettant de faire tourner le moteur thermique à un régime de ralenti. Dans ce mode de ralenti, le moteur électrique est entraîné en rotation et fonctionne alors telle une machine électrique en mode générateur par exemple pour recharger en énergie électrique ladite au moins une source d'alimentation électrique.

Le mode de ralenti est mis en œuvre par un système superviseur permettant de commander par exemple le débit d'une pompe de carburant et ainsi d'alimenter en carburant le ou les moteurs thermiques pour qu'ils fonctionnent à leur régime de ralenti.

A ce régime de ralenti du ou des moteurs thermiques, la vitesse de rotation NR dudit au moins un rotor de sustentation peut ainsi atteindre la première vitesse de seuil V1 non nulle.

Par exemple, la première vitesse de seuil V1 peut être comprise entre 70% et 80% d'une valeur nominale de rotation NRnom par exemple correspondant à une vitesse de rotation permettant d'effectuer une phase de vol nominale prédéterminée. La seconde vitesse de seuil V2 peut être comprise entre 95% et 100% de cette valeur nominale de rotation NRnom.

A partir de l'instant où la première vitesse de seuil V1 est atteinte, le moteur thermique peut alors être maintenu avec une alimentation en carburant permettant un fonctionnement stabilisé du moteur thermique et on met alors en œuvre la première commande de l'alimentation électrique dudit au moins un moteur électrique de manière à faire croître la vitesse de rotation NR dudit au moins un rotor de sustentation jusqu'à une seconde vitesse de seuil V2 supérieure à la première vitesse de seuil V1.

Une telle première commande de l'alimentation électrique est effectuée par le système superviseur de l'installation motrice hybride selon le profil de commande prédéterminé, par exemple selon une fonction affine d'une tension électrique ou d'un courant d'alimentation en fonction d'une variable temporelle et de paramètres stockés dans une mémoire du système superviseur.

Le ou les moteurs électriques sont alors sollicités pour fonctionner avec une puissance nominale selon le profil de commande prédéterminé pour détecter de potentiels disfonctionnements, ou une baisse de performance du ou des moteurs électriques.

La première durée D1 mise par le ou les moteurs électriques pour faire tourner le ou les rotors de sustentation à la vitesse V2 est alors comparée avec la durée de seuil prédéterminée Ds. Lorsque la première durée D1 est inférieure à la durée de seuil prédéterminée Ds, le test est validé et l'aéronef peut alors éventuellement commencer sa mission ou procéder à un test supplémentaire, le cas échéant.

En revanche, si la première durée D1 est supérieure ou égale à la durée de seuil prédéterminée Ds, le test a alors échoué et l'installation motrice hybride peut être arrêtée.

A titre d'exemple, une telle durée de seuil prédéterminée Ds peut être avantageusement comprise entre 2 s (seconde) et 4 s (seconde).

En outre, cette durée de seuil prédéterminée Ds doit être choisie suffisamment longue pour éviter la formation d'à-coups importants de couple mécanique sur les ensembles dynamiques de l'hélicoptère et aussi éviter d'éventuels mouvements de lacet induis.

Un tel procédé de test peut par ailleurs comprendre une ou plusieurs des caractéristiques qui suivent, prises seules ou en combinaison.

En outre, la première commande de l'alimentation électrique dudit au moins un moteur électrique peut comporter au moins une boucle de régulation de manière à ce que la vitesse de rotation **NR** du ou des rotors de sustentation atteigne la seconde vitesse de seuil V2.

Selon un premier exemple de réalisation de l'invention, la première commande de l'alimentation électrique dudit au moins un moteur électrique peut comporter une première régulation en couple relative à un couple moteur fourni par ledit au moins un moteur électrique.

Autrement dit selon ce premier exemple, on peut mesurer le couple moteur fourni par ledit au moins un moteur électrique et le comparer avec une consigne de couple pour effectuer une boucle d'asservissement en couple afin de réguler la première commande de l'alimentation électrique.

Une telle consigne de couple varie alors d'une consigne de couple nulle ou minimale à une consigne de couple maximale permettant d'entraîner en rotation le ou les rotors de sustentation à la vitesse de rotation NR supérieure ou égale à la seconde vitesse de seuil V2.

Selon un deuxième exemple de réalisation de l'invention, la première commande de l'alimentation électrique dudit au moins un moteur électrique peut comporter une deuxième régulation en vitesse relative à une vitesse de rotation d'un organe d'une chaîne cinématique de transmission reliant ledit au moins un moteur électrique audit au moins un rotor de sustentation.

Selon le deuxième exemple, on peut mesurer la vitesse de rotation d'un organe d'une chaîne cinématique de transmission et la comparer avec une consigne de vitesse de manière à mettre en œuvre une boucle d'asservissement en vitesse afin de réguler la première commande de l'alimentation électrique.

Une telle consigne de vitesse varie alors d'une consigne de vitesse nulle ou minimale à une consigne de vitesse maximale permettant d'entraîner en rotation le ou les rotors de sustentation à la vitesse de rotation NR supérieure ou égale à la seconde vitesse de seuil V2.

Selon un troisième exemple de réalisation de l'invention, la première commande de l'alimentation électrique dudit au moins un moteur électrique peut comporter une troisième régulation en puissance relative à une puissance motrice fournie par ledit au moins un moteur électrique.

Enfin selon ce troisième exemple, il est aussi envisageable de déterminer ou de calculer la puissance motrice fournie par ledit au moins un moteur électrique puis de la comparer avec une consigne de puissance de manière à mettre en œuvre une boucle d'asservissement en puissance afin de réguler la première commande de l'alimentation électrique.

Une telle consigne de puissance varie alors d'une consigne de puissance nulle ou minimale à une consigne de puissance maximale permettant d'entraîner en rotation le ou les rotors de sustentation à la vitesse de rotation NR supérieure ou égale à la seconde vitesse de seuil V2.

Par ailleurs, la première commande de l'alimentation électrique dudit au moins un moteur électrique peut être mise en œuvre de différentes manières.

Selon une première variante de l'invention, la première commande de l'alimentation électrique dudit au moins un moteur électrique peut être mise en œuvre automatiquement par un système superviseur.

Par suite, selon cette première variante, le premier test peut être mis en œuvre automatiquement après un démarrage du ou des moteurs thermiques, voir après chaque démarrage. Dans ce cas, ce premier test peut être déclenché directement par le système superviseur sans que le pilote actionne un organe de commande.

Selon une seconde variante de l'invention, la première commande de l'alimentation électrique dudit au moins un moteur électrique peut être mise en œuvre sous la dépendance d'une consigne de commande transmise par un organe de commande à un système superviseur, l'organe de commande permettant de commander collectivement un pas de pales dudit au moins un rotor de sustentation.

Dans ce cas, la modification de l'alimentation électrique dudit au moins un moteur électrique permettant l'augmentation de la vitesse de rotation NR de la première vitesse de seuil V1 à la seconde vitesse de seuil V2 peut être contrôlée par le pilote à l'aide d'un levier de commande d'un pas de pales dudit au moins un rotor de sustentation variant collectivement.

Eventuellement, la chaîne cinématique de commande du pas collectif des pales peut comporter des limitations en vitesse pour protéger des composants de l'aéronef et notamment des ensembles dynamiques de cet aéronef tels qu'une boîte de transmission principale de puissance et ledit au moins un rotor de sustentation.

En pratique, la première commande de l'alimentation électrique dudit au moins un moteur électrique peut être déclenchée par un pilote par une sélection d'un mode prédéterminé, la sélection étant mise en œuvre au moyen d'une première interface homme machine.

Autrement dit, le mode sélectionné par le pilote peut être un mode test visant à lancer au moins le procédé de test puis à revenir ensuite dans le mode initial précédent cette sélection du mode test.

Ainsi, si le mode test est sélectionné par le pilote, une fois le procédé de test effectué, l'alimentation électrique dudit au moins un moteur électrique peut être coupée et la vitesse de rotation NR peut décroitre automatiquement de la seconde vitesse de seuil V2 à la première vitesse de seuil V1. Le système superviseur peut alors mettre en œuvre le mode de ralenti du moteur thermique si le test est validé, voir peut alternativement couper l'alimentation en carburant du moteur thermique si le test a échoué.

En outre, lorsque le premier test a échoué, le système superviseur peut éventuellement informer le pilote par une alarme sonore ou visuelle. Le pilote peut alors décider de décoller pour effectuer sa mission avec des limitations liées au fait que le premier test n'est pas validé.

Alternativement, le mode sélectionné par le pilote peut être un mode vol visant à lancer dans un premier temps le procédé de test puis dans un deuxième temps à mettre en œuvre le mode vol en tant que tel qui est différent du mode initial précédent cette sélection du mode vol.

Ainsi lorsque le mode vol est sélectionné par le pilote, une fois le procédé de test effectué, l'alimentation électrique dudit au moins un moteur électrique peut être coupée. Cependant, la vitesse de rotation NR peut être maintenue supérieure ou égale à la seconde vitesse de seuil V2 par une nouvelle commande de l'alimentation en carburant dudit au moins un moteur thermique.

En outre, le système superviseur peut alors mettre en œuvre le mode vol si le test est validé ou peut alternativement couper l'alimentation en carburant du moteur thermique si le test a échoué.

Par ailleurs, la première interface homme machine permettant de sélectionner le mode prédéterminé peut être un bouton de commande, un clavier, un dispositif de pointage sur un écran ou encore une interface de commande tactile.

Avantageusement, le premier test est validé, le procédé peut comporter au moins un autre test supplémentaire.

Ainsi, le procédé peut comporter un second test comportant les étapes suivantes :
- lorsque la vitesse de rotation NR dudit au moins un rotor de sustentation est supérieure ou égale à la seconde vitesse de seuil V2, seconde commande d'une alimentation électrique dudit au moins un moteur électrique, la seconde commande de l'alimentation électrique étant configurée pour maintenir la vitesse de rotation NR dudit au moins un rotor de sustentation supérieure ou égale à la seconde vitesse de seuil V2 pendant une seconde durée prédéterminée D2,
- calcul d'une puissance électrique Pe fournie par ladite au moins une source d'alimentation électrique audit au moins un moteur électrique pendant la seconde durée prédéterminée D2, et
- identification que ladite puissance électrique Pe est stable pendant la seconde durée prédéterminée D2 en étant comprise entre une puissance de seuil prédéterminée inférieure Psinf et une puissance de seuil prédéterminée supérieure Pssup.

Une telle puissance électrique Pe correspond ainsi à la puissance totale fournie audit au moins un moteur électrique par ladite au moins une source d'alimentation électrique pendant cette seconde durée prédéterminée D2. Une telle puissance électrique Pe peut notamment être calculée à partir d'un courant électrique fourni audit au moins un moteur électrique par ladite au moins une source d'alimentation électrique pendant cette seconde durée prédéterminée D2.

La puissance électrique Pe fournie par ladite au moins une source d'alimentation électrique pour maintenir le ou les rotors de sustentation à la vitesse V2 pendant la seconde durée prédéterminée D2 est alors comparée avec les puissances de seuil prédéterminée inférieure Psinf et de seuil prédéterminée supérieure Pssup. Lorsque la puissance électrique Pe est sensiblement constante pendant la seconde durée prédéterminée D2 en étant supérieure à la puissance de seuil prédéterminée inférieure Psinf et inférieure à la puissance de seuil prédéterminée supérieure Pssup, le second test est validé et l'aéronef peut alors éventuellement commencer sa mission ou procéder à un test supplémentaire, le cas échéant.

En revanche, si la puissance électrique Pe n'est pas stable et ne reste pas comprise entre la puissance de seuil prédéterminée inférieure Psinf et une puissance de seuil prédéterminée supérieure Pssup, le second test a alors échoué et l'installation motrice hybride peut être par exemple arrêtée.

Alternativement, lorsque le second test a échoué, le système superviseur peut éventuellement informer le pilote par une alarme sonore ou visuelle.

Lorsque ce second test est réalisé au sol, le pilote peut alors décider de décoller pour effectuer sa mission avec des limitations liées au fait que le second test n'est pas validé.

Lorsque ce second test est réalisé en vol, le pilote peut alors décider de terminer sa mission courante avec des limitations liées au fait que le second test n'est pas validé.

A titre d'exemple, une telle puissance électrique Pe fournie par ladite au moins une source d'alimentation électrique pendant la seconde durée prédéterminée D2 peut être avantageusement comprise entre 50 kW (kilowatt) et 100 kW (kilowatt). Selon cet exemple, la puissance de seuil prédéterminée inférieure Psinf peut alors être égale à 49 kW (kilowatt) et la puissance de seuil prédéterminée supérieure Pssup peut alors être égale à 101 kW.

A titre d'exemple, une telle seconde durée prédéterminée D2 peut être avantageusement comprise entre 0,5 s (seconde) et 2 s (seconde).

Selon une première réalisation de l'invention, le second test peut être déclenché par un pilote par une sélection mise en œuvre au moyen d'une seconde interface homme machine.

Comme pour la première interface homme machine, la seconde interface homme machine peut être un bouton de commande, un clavier, un dispositif de pointage sur un écran ou encore une interface de commande tactile.

En outre, la première interface homme machine et la seconde interface homme machine peuvent être disjointes l'une de l'autre ou alternativement être confondues et former une unique interface homme machine.

Selon une seconde réalisation de l'invention, le second test peut être réalisé automatiquement à la suite du premier test.

Dans ce cas, le second test peut être déclenché sans action particulière du pilote. Ainsi, aucune interface homme machine n'est utilisée pour sélectionner le second test. Eventuellement et si le premier test est validé, une temporisation prédéterminée de par exemple de quelques secondes peut être mise en œuvre par le système superviseur entre la fin du premier test et le début du second test.

En pratique, le second test peut être réalisé au sol.

Ainsi, une fois le premier test effectué et validé, le second test peut être déclenché avant de procéder au décollage de l'aéronef.

Alternativement, le second test peut être réalisé lors d'une phase de vol de l'aéronef.

Dans ce cas, le second test peut être mis en œuvre après le décollage de l'aéronef et donc pendant une phase de vol de l'aéronef lors d'une phase d'hybridation de l'installation motrice hybride utilisant ledit au moins un moteur électrique.

La présente invention a aussi pour objet un programme d'ordinateur configuré pour être mis en œuvre dans un aéronef à voilure tournante comportant au moins un rotor de sustentation et une installation motrice hybride, l'installation motrice hybride étant configurée pour entraîner en rotation ledit au moins un rotor de sustentation, l'installation motrice hybride comportant :
- au moins un moteur thermique configuré pour entraîner en rotation ledit au moins un rotor de sustentation, et
- au moins un moteur électrique alimenté en énergie électrique par au moins une source d'alimentation électrique, ledit au moins un moteur électrique étant configuré pour entraîner en rotation ledit au moins un rotor de sustentation au moins lors d'une panne d'au moins un parmi ledit au moins un moteur thermique.

Selon l'invention, le programme d'ordinateur est remarquable en ce qu'il comporte une séquence d'instructions exécutables par un système superviseur relié à l'installation motrice hybride, le système superviseur mettant en œuvre le procédé de test de l'installation motrice hybride précité.

Un tel programme d'ordinateur est alors avantageusement mémorisé dans une unité de stockage du système superviseur.

L'invention vise également un aéronef à voilure tournante comportant au moins un rotor de sustentation et une installation motrice hybride, l'installation motrice hybride étant configurée pour entraîner en rotation ledit au moins un rotor de sustentation, l'installation motrice hybride comportant :
- au moins un moteur thermique configuré pour entraîner en rotation ledit au moins un rotor de sustentation, et
- au moins un moteur électrique alimenté en énergie électrique par au moins une source d'alimentation électrique, ledit au moins un moteur électrique étant configuré pour entraîner en rotation ledit au moins un rotor de sustentation au moins lors d'une panne d'au moins un parmi ledit au moins un moteur thermique.

Selon l'invention, l'aéronef est remarquable en ce qu'il comporte un système superviseur relié à l'installation motrice hybride, le système superviseur mettant en œuvre le procédé de test de l'installation motrice hybride précité.

Par suite, un tel aéronef embarque à son bord un système superviseur apte à réaliser au moins le premier test, voire également le second test.

L'invention et ses avantages apparaîtront avec plus de détails dans le cadre de la description qui suit avec des exemples donnés à titre illustratif en référence aux figures annexées qui représentent :
la figure 1, un schéma illustrant une mission d'un aéronef selon l'invention,
la figure 2, un logigramme illustrant un premier exemple de procédé de test d'une installation motrice hybride conforme à l'invention,
la figure 3, un logigramme illustrant un second exemple de procédé de test d'une installation motrice hybride conforme à l'invention,
la figure 4, des courbes représentatives des commandes de l'installation motrice hybride mises en œuvre lors d'un procédé de test conforme à l'invention,
la figure 5, un schéma illustrant un premier exemple d'aéronef conforme à l'invention, et
la figure 6, un schéma illustrant un second exemple d'aéronef conforme à l'invention.

Les éléments présents dans plusieurs figures distinctes sont affectés d'une seule et même référence.

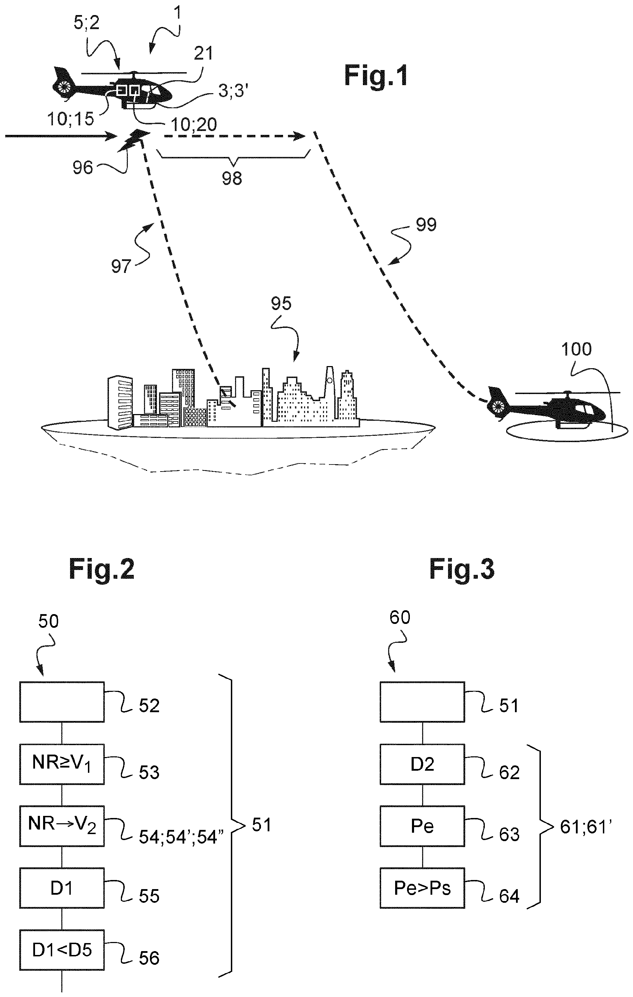

La figure 1 présente un aéronef 1 selon l'invention. Cet aéronef 1 est muni d'une installation motrice hybride 10. L'installation motrice hybride 10 comporte au moins un moteur thermique 15 et au moins un moteur électrique 20 qui sont tous les deux aptes à mettre en mouvement au moins un rotor de sustentation 2, voire uniquement un moteur thermique 15 et un moteur électrique 20. Un tel au moins un rotor de sustentation 2 peut avoir pour fonction de participer à l'avancement et/ou à la propulsion de l'aéronef 1. Ce au moins un rotor de sustentation 2 comporte ainsi au moins une pale 5.

Par exemple, le moteur thermique 15 est par défaut en fonctionnement, le moteur électrique 20 ayant pour fonction de pallier une panne du moteur thermique 15.

Sur un aéronef monomoteur classique, suite à une panne 96 du moteur thermique, l'aéronef effectue une descente 97. Par exemple, un hélicoptère effectue un vol dit en « autorotation ». Lors d'un survol d'une zone urbaine 95, l'aéronef est susceptible de se diriger vers cette zone.

Avec un aéronef 1 selon l'invention muni d'une installation motrice hybride 10, suite à la panne 96, le moteur électrique 20 prend le relais du moteur thermique 15 et met en mouvement le ou les rotors de sustentation 2. Pendant une certaine durée, l'aéronef 1 peut poursuivre son vol durant une phase de vol 98 motorisée électriquement, puis effectue une descente 99. Par exemple, l'aéronef 1 effectue un vol dit en « autorotation » lors de la descente 99. Lors d'un survol d'une zone urbaine 95, l'aéronef 1 est susceptible de s'éloigner de cette zone urbaine pour atteindre une zone sécurisée 100 pour effectuer un atterrissage.

Un aéronef 1 selon l'invention permet à un pilote de s'assurer que le système de motorisation électrique est fonctionnel avant le décollage, voire également pendant une phase de vol.

Tel que représenté à la figure 2, un premier exemple de procédé 50 de test de l'installation motrice hybride 10 comporte un premier test 51 effectué au sol comportant dans un premier temps un démarrage 52 du ou des moteurs thermiques 15 et une commande d'une alimentation en carburant 53 du ou des moteurs thermiques 15 pour faire croître une vitesse de rotation NR du ou des rotors de sustentation 2 jusqu'à une première vitesse de seuil V1.

Dans un second temps, lorsque la vitesse de rotation NR du ou des rotors de sustentation 2 est supérieure ou égale à la première vitesse de seuil V1, le premier test 51 comporte alors une première commande d'une alimentation électrique 54, 54', 54" du ou des moteurs électriques 20 pour faire croître la vitesse de rotation NR du ou des rotors de sustentation 2 jusqu'à une seconde vitesse de seuil V2 supérieure à la première vitesse de seuil V1.

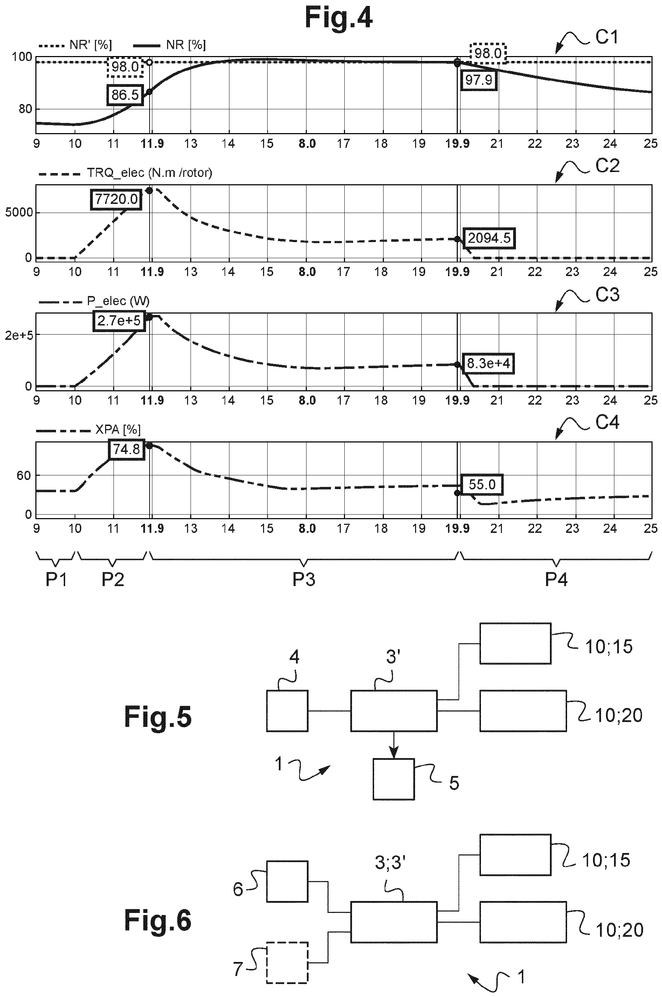

En outre, cette première commande de l'alimentation électrique 54, 54', 54" est réalisée par exemple selon un profil de commande prédéterminé tel que représenté à la figure 4. Un tel profil de commande prédéterminé est en effet illustré lors d'une phase P2 de la courbe C2 représentative du couple moteur fourni par le ou les moteurs électriques 20 en fonction du temps.

Une telle première commande de l'alimentation électrique 54, 54', 54" du ou des moteurs électrique 20 est en outre mise en œuvre au moyen d'un système superviseur 3, 3' embarqué dans l'aéronef 1. Cette première commande de l'alimentation électrique 54, 54', 54" peut être par exemple automatique dans le cas du système superviseur 3 ou alternativement, tel que représenté à la figure 5, en fonction d'une consigne de commande transmise par un organe de commande 4 au système superviseur 3'. Un tel organe de commande 4 est configuré pour commander collectivement un pas de la ou des pales 5 du ou des rotors de sustentation 2.

Le système superviseur 3, 3' peut comprendre par exemple au moins un processeur et au moins une mémoire, au moins un circuit intégré, au moins un système programmable, au moins un circuit logique, ces exemples ne limitant pas la portée donnée à l'expression « système superviseur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, le système superviseur 3, 3' permet d'exécuter un programme d'ordinateur conforme à l'invention comportant une séquence d'instructions mettant en œuvre le procédé 50 de test de l'installation motrice hybride 10.

Selon un premier exemple de réalisation de l'invention, cette première commande de l'alimentation électrique 54 du ou des moteurs électriques 20 peut comporter une première régulation en couple relative à un couple moteur fourni par le ou les moteurs électriques 20.

Selon un deuxième exemple de réalisation de l'invention, la première commande de l'alimentation électrique 54' du ou des moteurs électriques 20 peut comporter une deuxième régulation en vitesse relative à une vitesse de rotation d'un organe d'une chaîne cinématique de transmission reliant le ou les moteurs électriques 20 au(x) rotor(s) de sustentation 2.

Et selon un troisième exemple de réalisation de l'invention, la première commande de l'alimentation électrique 54" du ou des moteurs électriques 20 peut comporter une troisième régulation en puissance relative à une puissance motrice fournie par le ou les moteurs électriques 20.

Le premier test 51 comporte ensuite une détermination 55 d'une première durée D1 mise par le ou les rotors de sustentation 2 pour passer de la première vitesse de seuil V1 à la seconde vitesse de seuil V2, puis une vérification 56 que cette première durée D1 est inférieure à une durée de seuil prédéterminée Ds.

Tel que représenté à la figure 3, un second exemple de procédé 60 de test de l'installation motrice hybride 10 comporte en plus du premier test 51 précité un second test 61, 61'.

Ce second test 61, 61' comporte alors, lorsque la vitesse de rotation NR du ou des rotors de sustentation 2 est supérieure ou égale à la seconde vitesse de seuil V2, une seconde commande d'une alimentation électrique 62 du ou des moteurs électriques 20. Une telle seconde commande de l'alimentation électrique 62 est quant à elle configurée pour maintenir la vitesse de rotation NR du ou des rotors de sustentation 2 supérieure ou égale à la seconde vitesse de seuil V2 pendant une seconde durée prédéterminée D2.

Le second test 61, 61' comporte ensuite un calcul 63 d'une puissance électrique Pe fournie par la ou les sources d'alimentation électrique 21 au(x) moteur(s) électrique(s) 20 pendant la seconde durée prédéterminée D2 et enfin une identification 64 que la puissance électrique Pe est sensiblement stable et comprise entre une puissance de seuil prédéterminée inférieure Psinf et une puissance de seuil prédéterminée supérieure Pssup.

En outre, le système superviseur 3, 3' peut aussi permettre d'exécuter un programme d'ordinateur comportant une séquence d'instructions mettant en œuvre le procédé 60 de test de l'installation motrice hybride 10.

Telle que représenté à la figure 4, la courbe C1 est représentative de la vitesse de rotation NR du ou des rotors de sustentation 2 en fonction du temps pour des phases successives P1, P2, P3 et P4.

La courbe C2 est quant à elle représentative du couple moteur fourni par le ou les moteurs électriques 20 pour entraîner le ou les rotors de sustentation 2 en fonction du temps durant les mêmes phases successives P1, P2, P3 et P4.

La courbe C3 est représentative de la puissance électrique fournie par le ou les moteurs électriques 20 pour entraîner le ou les rotors de sustentation 2 en fonction du temps durant les mêmes phases successives P1, P2, P3 et P4.

Enfin, la courbe C4 est représentative d'une consigne de commande d'un pas collectif des pales 5 du ou des rotors de sustentation 2 en fonction du temps durant les mêmes phases successives P1, P2, P3 et P4.

Telle que représentée à la figure 6, la première commande de l'alimentation électrique 54, 54', 54" du ou des moteurs électriques 20 peut être déclenchée par un pilote par une sélection d'un mode prédéterminé. Une telle sélection peut être mise en œuvre au moyen d'une première interface homme machine 6 formée par exemple par un bouton, un dispositif de pointage ou une interface de commande tactile.

La première interface homme machine 6 est alors reliée avec le système superviseur 3, 3' pour permettre de commencer la première commande de l'alimentation électrique 54, 54', 54" du ou des moteurs électriques 20 en fonction du mode prédéterminé sélectionné.

Un tel mode prédéterminé peut être par exemple un mode test visant par exemple à effectuer le premier test 51 puis à stopper la première commande de l'alimentation électrique 54, 54', 54" du ou des moteurs électriques 20 ou un mode vol permettant par exemple de réaliser le premier test 51 et le second test 61, 61' avant de permettre un décollage de l'aéronef 1 si les deux tests sont validés.

De même, le second test 61 peut être déclenché par un pilote par une sélection mise en œuvre au moyen d'une seconde interface homme machine 7. Une telle seconde interface homme machine 7 peut également être formé par exemple par un bouton, un dispositif de pointage ou une interface de commande tactile.

En outre, cette seconde interface homme machine 7 peut être disjointe ou confondue avec la première interface homme machine 6.

Alternativement, le second test 61' peut être déclenché automatiquement à la suite d'une validation du premier test 51.

En tout état de cause, si l'un des tests 51, 61, 61' n'est pas validé, le système superviseur 3, 3' peut commander soit un arrêt de l'installation motrice hybride 10 dans le cas où l'aéronef 1 est au sol, soit une alerte visant à informer le pilote d'un problème dans le cas où l'aéronef 1 est en vol.

Dans ce second cas, le pilote peut alors être contraint d'abandonner sa mission, de rentrer à une base ou encore de procéder à un atterrissage d'urgence.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé (50) de test d'une installation motrice hybride (10) équipant un aéronef (1) à voilure tournante comportant au moins un rotor de sustentation (2), ladite installation motrice hybride (10) étant configurée pour entraîner en rotation ledit au moins un rotor de sustentation (2), ladite installation motrice hybride (10) comportant :
• au moins un moteur thermique (15) configuré pour entraîner en rotation ledit au moins un rotor de sustentation (2), et
• au moins un moteur électrique (20) alimenté en énergie électrique par au moins une source d'alimentation électrique (21), ledit au moins un moteur électrique (20) étant configuré pour entraîner en rotation ledit au moins un rotor de sustentation (2) au moins lors d'une panne d'au moins un parmi ledit au moins un moteur thermique (15),
**caractérisé en ce que** ledit procédé (50, 60) comporte un premier test (51) effectué au sol comportant les étapes suivantes :
• démarrage (52) dudit au moins un moteur thermique (15),
• commande d'une alimentation en carburant (53) dudit au moins un moteur thermique (15), ladite commande de l'alimentation en carburant (53) étant configurée pour qu'une vitesse de rotation NR dudit au moins un rotor de sustentation (2) atteigne une première vitesse de seuil V1,
• lorsque ladite vitesse de rotation NR dudit au moins un rotor de sustentation (2) est supérieure ou égale à ladite première vitesse de seuil V1, première commande d'une alimentation électrique (54, 54', 54") dudit au moins un moteur électrique (20), ladite première commande de l'alimentation électrique (54, 54', 54") étant configurée pour que ladite vitesse de rotation NR dudit au moins un rotor de sustentation (2) atteigne une seconde vitesse de seuil V2 supérieure à ladite première vitesse de seuil V1, ladite première commande de l'alimentation électrique (54, 54', 54") étant réalisée selon un profil de commande prédéterminé,
• détermination (55) d'une première durée D1 mise par ledit au moins un rotor de sustentation (2) pour passer de ladite première vitesse de seuil V1 à ladite seconde vitesse de seuil V2, et
• vérification (56) que ladite première durée D1 est inférieure à une durée de seuil prédéterminée Ds.

2. Procédé selon la revendication 1,
**caractérisé en ce que** ladite première commande de l'alimentation électrique (54) dudit au moins un moteur électrique (20) comporte une première régulation en couple relative à un couple moteur fourni par ledit au moins un moteur électrique (20).

3. Procédé selon la revendication 1,
**caractérisé en ce que** ladite première commande de l'alimentation électrique (54') dudit au moins un moteur électrique (20) comporte une deuxième régulation en vitesse relative à une vitesse de rotation d'un organe d'une chaîne cinématique de transmission reliant ledit au moins un moteur électrique (20) audit au moins un rotor de sustentation (2).

4. Procédé selon la revendication 1,
**caractérisé en ce que** ladite première commande de l'alimentation électrique (54") dudit au moins un moteur électrique (20) comporte une troisième régulation en puissance relative à une puissance motrice fournie par ledit au moins un moteur électrique (20).

5. Procédé selon l'une quelconque des revendications 1 à 4,
**caractérisé en ce que** ladite première commande de l'alimentation électrique (54, 54', 54") dudit au moins un moteur électrique (20) est mise en œuvre automatiquement par un système superviseur (3).

6. Procédé selon l'une quelconque des revendications 1 à 5,
**caractérisé en ce que** ladite première commande de l'alimentation électrique (54, 54', 54") dudit au moins un moteur électrique (20) est mise en œuvre sous la dépendance d'une consigne de commande transmise par un organe de commande (4) à un système superviseur (3'), ledit organe de commande (4) permettant de commander collectivement un pas de pales (5) dudit au moins un rotor de sustentation (2).

7. Procédé selon l'une quelconque des revendications 1 à 6,
**caractérisé en ce que** ladite première commande de l'alimentation électrique (54, 54', 54") dudit au moins un moteur électrique (20) est déclenchée par un pilote par une sélection d'un mode prédéterminé, ladite sélection étant mise en œuvre au moyen d'une première interface homme machine (6).

8. Procédé selon l'une quelconque des revendications 1 à 7,
**caractérisé en ce que** ledit procédé (60) comporte un second test (61, 61') comportant les étapes suivantes :
• lorsque ladite vitesse de rotation NR dudit au moins un rotor de sustentation (2) est supérieure ou égale à ladite seconde vitesse de seuil V2, seconde commande d'une alimentation électrique (62) dudit au moins un moteur électrique (20), ladite seconde commande de l'alimentation électrique (62) étant configurée pour maintenir ladite vitesse de rotation NR dudit au moins un rotor de sustentation (2) supérieure ou égale à ladite seconde vitesse de seuil V2 pendant une seconde durée prédéterminée D2,
• calcul (63) d'une puissance électrique Pe fournie par ladite au moins une source d'alimentation électrique (21) audit au moins un moteur électrique (20) pendant ladite seconde durée prédéterminée D2, et
• identification (64) que ladite puissance électrique Pe est stable pendant la seconde durée prédéterminée D2 en étant comprise entre une puissance de seuil prédéterminée inférieure Psinf et une puissance de seuil prédéterminée supérieure Pssup.

9. Procédé selon la revendication 8,
**caractérisé en ce que** ledit second test (61) est déclenché par un pilote par une sélection mise en œuvre au moyen d'une seconde interface homme machine (7).

10. Procédé selon la revendication 8,
**caractérisé en ce que** ledit second test (61') est réalisé automatiquement à la suite dudit premier test (51).

11. Procédé selon l'une quelconque des revendications 8 à 10,
**caractérisé en ce que** ledit second test (61, 61') est réalisé au sol.

12. Procédé selon l'une quelconque des revendications 8 à 10,
**caractérisé en ce que** ledit second test (61, 61') est réalisé lors d'une phase de vol dudit aéronef (1).

13. Programme d'ordinateur configuré pour être mis en œuvre dans un aéronef (1) à voilure tournante comportant au moins un rotor de sustentation (2) et une installation motrice hybride (10), ladite installation motrice hybride (10) étant configurée pour entraîner en rotation ledit au moins un rotor de sustentation (2), ladite installation motrice hybride (10) comportant :
• au moins un moteur thermique (15) configuré pour entraîner en rotation ledit au moins un rotor de sustentation (2), et
• au moins un moteur électrique (20) alimenté en énergie électrique par au moins une source d'alimentation électrique (21), ledit au moins un moteur électrique (20) étant configuré pour entraîner en rotation ledit au moins un rotor de sustentation (2) au moins lors d'une panne d'au moins un parmi ledit au moins un moteur thermique (15),
**caractérisé en ce que** ledit programme d'ordinateur comporte une séquence d'instructions exécutables par un système superviseur (3, 3') relié à ladite installation motrice hybride (10), ledit système superviseur (3, 3') mettant en œuvre ledit procédé (50, 60) de test de ladite installation motrice hybride (10) selon la revendication 1.

14. Aéronef (1) à voilure tournante comportant au moins un rotor de sustentation (2) et une installation motrice hybride (10), ladite installation motrice hybride (10) étant configurée pour entraîner en rotation ledit au moins un rotor de sustentation (2), ladite installation motrice hybride (10) comportant :
• au moins un moteur thermique (15) configuré pour entraîner en rotation ledit au moins un rotor de sustentation (2), et
• au moins un moteur électrique (20) alimenté en énergie électrique par au moins une source d'alimentation électrique (21), ledit au moins un moteur électrique (20) étant configuré pour entraîner en rotation ledit au moins un rotor de sustentation (2) au moins lors d'une panne d'au moins un parmi ledit au moins un moteur thermique (15),
**caractérisé en ce que** ledit aéronef (1) comporte un système superviseur (3, 3') relié à ladite installation motrice hybride (10), ledit système superviseur (3, 3') mettant en œuvre ledit procédé (50, 60) de test de ladite installation motrice hybride (10) selon la revendication 1.

## Patentansprüche

1. Verfahren (50) zum Testen einer Hybridantriebsanlage (10), mit der ein mindestens einen Hubrotor (2) aufweisender Drehflügel-Luftfahrzeugs (1) ausgestattet ist, wobei die Hybridantriebsanlage (10) zum Drehantreiben des mindestens einen Hubrotors (2) konfiguriert ist, und die Hybridantriebsanlage (10) umfasst:
• mindestens einen Verbrennungsmotor (15), der zum Drehantreiben des mindestens einen Hubrotors (2) konfiguriert ist, und
• mindestens einen Elektromotor (20), der von mindestens einer Stromquelle (21) mit elektrischer Energie versorgt wird, wobei der mindestens eine Elektromotor (20) konfiguriert ist, um den mindestens einen Hubrotor (2) zumindest bei einem Ausfall mindestens eines der mindestens einen Verbrennungsmotoren (15) drehanzutreiben,
**dadurch gekennzeichnet, dass** das Verfahren (50, 60) einen ersten am Boden durchgeführten Test (51) umfasst, der die folgenden Schritte umfasst:
• Starten (52) des mindestens einen Verbrennungsmotors (15),
• Steuern einer Kraftstoffversorgung (53) des mindestens einen Verbrennungsmotors (15), wobei die Steuerung der Kraftstoffversorgung (53) so konfiguriert ist, dass eine Drehzahl NR des mindestens einen Hubrotors (2) eine erste Schwellenwertdrehzahl V1 erreicht,
• wenn die Drehzahl NR des mindestens einen Hubrotors (2) größer oder gleich der ersten Schwellenwertdrehzahl V1 ist, erstes Ansteuern einer Stromversorgung (54, 54', 54") des mindestens einen Elektromotors (20), wobei das erste Ansteuern der Stromversorgung (54, 54', 54") so konfiguriert ist, dass die Drehzahl NR des mindestens einen Hubrotors (2) eine zweite Schwellenwertdrehzahl V2 erreicht, die höher ist als die erste Schwellenwertdrehzahl V1, wobei das erste Ansteuern der Stromversorgung (54, 54', 54") gemäß einem vorgegebenen Steuerprofil ausgeführt wird,
• Bestimmen (55) einer ersten Zeitspanne D1, die der mindestens eine Hubrotor (2) benötigt, um von der ersten Schwellengeschwindigkeit V1 auf die zweite Schwellengeschwindigkeit V2 überzugehen, und
• Überprüfen (56), dass die erste Zeitspanne D1 kleiner ist als eine vorgegebene Schwellenzeitspanne Ds.

2. Verfahren nach Anspruch 1,
**dadurch gekennzeichnet, dass** das erste Ansteuern der Stromversorgung (54) des mindestens einen Elektromotors (20) eine erste Regelung des Drehmoments in Bezug auf ein von dem mindestens einen Elektromotor (20) geliefertes Motordrehmoment umfasst.

3. Verfahren nach Anspruch 1,
**dadurch gekennzeichnet, dass** das erste Ansteuern der Stromversorgung (54') des mindestens einen Elektromotors (20) eine zweite Regelung der Drehzahl in Bezug auf eine Drehzahl eines Elements einer kinematischen Übertragungskette umfasst, die den mindestens einen Elektromotor (20) mit dem mindestens einen Hubrotor (2) verbindet.

4. Verfahren nach Anspruch 1,
**dadurch gekennzeichnet, dass** das erste Ansteuern der Stromversorgung (54") des mindestens einen Elektromotors (20) eine dritte Regelung der Leistung in Bezug auf eine von dem mindestens einen Elektromotor (20) gelieferte Antriebsleistung umfasst.

5. Verfahren nach einem der Ansprüche 1 bis 4,
**dadurch gekennzeichnet, dass** das erste Ansteuern der Stromversorgung (54, 54', 54") des mindestens einen Elektromotors (20) durch ein Überwachungssystem (3) automatisch implementiert wird.

6. Verfahren nach einem der Ansprüche 1 bis 5,
**dadurch gekennzeichnet, dass** das erste Ansteuern der Stromversorgung (54, 54', 54") des mindestens einen Elektromotors (20) in Abhängigkeit von einem Steuerbefehl erfolgt, der von einem Steuerorgan (4) an ein Überwachungssystem (3') übertragen wird, wobei das Steuerorgan (4) die gemeinsame Steuerung eines Anstellwinkels von Blättern (5) des mindestens einen Hubrotors (2) ermöglicht.

7. Verfahren nach einem der Ansprüche 1 bis 6,
**dadurch gekennzeichnet, dass** das erste Ansteuern der Stromversorgung (54, 54', 54") des mindestens einen Elektromotors (20) durch einen Piloten durch Auswahl eines vorgegebenen Modus ausgelöst wird, wobei die Auswahl mittels einer ersten Mensch-Maschine-Schnittstelle (6) durchgeführt wird.

8. Verfahren nach einem der Ansprüche 1 bis 7,
**dadurch gekennzeichnet, dass** das Verfahren (60) einen zweiten Test (61, 61') umfasst, der die folgenden Schritte umfasst:
• wenn die Drehzahl NR des mindestens einen Hubrotors (2) größer oder gleich der zweiten Schwellenwertdrehzahl V2 ist, zweites Ansteuern einer Stromversorgung (62) des mindestens einen Elektromotors (20), wobei das zweite Ansteuern der Stromversorgung (62) konfiguriert ist, um die Drehzahl NR des mindestens einen Hubrotors (2) für eine zweite vorgegebene Zeitspanne D2 größer oder gleich der zweiten Schwellengeschwindigkeit V2 zu halten,
• Berechnen (63) einer elektrischen Leistung Pe, die während der zweiten vorgegebenen Zeitspanne D2 von der mindestens einen Stromquelle (21) an den mindestens einen Elektromotor (20) geliefert wird, und
• Identifizieren (64) der elektrischen Leistung Pe als stabil während der zweiten vorbestimmten Zeitspanne D2, wenn sie zwischen einer vorbestimmten unteren Schwellenleistung Psinf und einer vorbestimmten oberen Schwellenleistung Pssup liegt.

9. Verfahren nach Anspruch 8,
**dadurch gekennzeichnet, dass** der zweite Test (61) von einem Piloten durch eine an einer zweiten Mensch-Maschine-Schnittstelle (7) durchgeführte Auswahl ausgelöst wird.

10. Verfahren nach Anspruch 8,
**dadurch gekennzeichnet, dass** der zweite Test (61') automatisch im Anschluss an den ersten Test (51) durchgeführt wird.

11. Verfahren nach einem der Ansprüche 8 bis 10,
**dadurch gekennzeichnet, dass** der zweite Test (61, 61') am Boden durchgeführt wird.

12. Verfahren nach einem der Ansprüche 8 bis 10,
**dadurch gekennzeichnet, dass** der zweite Test (61, 61') während einer Flugphase des Luftfahrzeugs (1) durchgeführt wird.

13. Computerprogramm, das für den Einsatz in einem mindestens einen Hubrotor (2) und eine Hybridantriebsanlage (10) aufweisenden Drehflügel-Luftfahrzeugs (1) konfiguriert ist, wobei die Hybridantriebsanlage (10) zum Drehantreiben des mindestens einen Hubrotors (2) konfiguriert ist, und die Hybridantriebsanlage (10) umfasst:
• mindestens einen Verbrennungsmotor (15), der zum Drehantreiben des mindestens einen Hubrotors (2) konfiguriert ist, und
• mindestens einen Elektromotor (20), der von mindestens einer Stromquelle (21) mit elektrischer Energie versorgt wird, wobei der mindestens eine Elektromotor (20) konfiguriert ist, um den mindestens einen Hubrotor (2) zumindest bei einem Ausfall mindestens eines der mindestens einen Verbrennungsmotoren (15) drehanzutreiben,
**dadurch gekennzeichnet, dass** das Computerprogramm eine Folge von Befehlen umfasst, die von einem mit der Hybridantriebsanlage (10) verbundenen Überwachungssystem (3, 3') ausführbar sind, wobei das Überwachungssystem (3, 3') das Verfahren (50, 60) zum Testen der Hybridantriebsanlage (10) gemäß Anspruch 1 implementiert.

14. Drehflügel-Luftfahrzeug (1) mit mindestens einem Hubrotor (2) und einer Hybridantriebseinrichtung (10), wobei die Hybridantriebseinrichtung (10) zum Drehantreiben des mindestens einen Hubrotors (2) konfiguriert ist, wobei die Hybridantriebseinrichtung (10) umfasst:
• mindestens einen Verbrennungsmotor (15), der zum Drehantreiben des mindestens einen Hubrotors (2) konfiguriert ist, und
• mindestens einen Elektromotor (20), der von mindestens einer Stromquelle (21) mit elektrischer Energie versorgt wird, wobei der mindestens eine Elektromotor (20) konfiguriert ist, um den mindestens einen Hubrotor (2) zumindest bei einem Ausfall mindestens eines der mindestens einen Verbrennungsmotoren (15) drehanzutreiben,
**dadurch gekennzeichnet, dass** das Luftfahrzeug (1) ein mit der Hybridantriebsanlage (10) verbundenes Überwachungssystem (3, 3') umfasst, wobei das Überwachungssystem (3, 3') das Verfahren (50, 60) zum Testen der Hybridantriebsanlage (10) gemäß Anspruch 1 implementiert.

## Claims

1. Method (50) for testing a hybrid power plant (10) equipping a rotary-wing aircraft (1) comprising at least one lift rotor (2), said hybrid power plant (10) being configured to rotate said at least one lift rotor (2), the hybrid power plant (10) comprising:
• at least one heat engine (15) configured to rotate said at least one lift rotor (2), and
• at least one electric motor (20) supplied with electrical energy by at least one electrical power source (21), said at least one electric motor (20) being configured to rotate said at least one lift rotor (2) at least when at least one of said at least one heat engines (15) fails,
**characterized in that** said method (50, 60) comprises a first test (51) performed on the ground comprising the following steps:
• starting (52) said at least one heat engine (15),
• controlling a supply of fuel (53) to said at least one heat engine (15), said control of the supply of fuel (53) being configured so that a speed of rotation NR of said at least one lift rotor (2) reaches a first threshold speed V1,
• when said speed of rotation NR of said at least one lift rotor (2) is greater than or equal to said first threshold speed V1, first control of a supply of power (54, 54', 54") to said at least one electric motor (20), the first control of the supply of power (54, 54', 54") being configured so that the speed of rotation NR of said at least one lift rotor (2) reaches a second threshold speed V2 greater than said first threshold speed V1, said first control of the supply of power (54, 54', 54") being carried out according to a predetermined control profile,
• determining (55) a first period of time D1 taken by said at least one lift rotor (2) to shift from said first threshold speed V1 to said second threshold speed V2, and
• checking (56) that said first time period D1 is less than a predetermined threshold time period Ds.

2. Method according to Claim 1,
**characterized in that** said first control of the supply of power (54) to said at least one electric motor (20) comprises a first torque regulation relative to an engine torque supplied by said at least one electric motor (20).

3. Method according to Claim 1,
**characterized in that** said first control of the supply of power (54') to said at least one electric motor (20) comprises a second speed regulation relative to a speed of rotation of a member of a transmission kinematic linkage linking said at least one electric motor (20) to said at least one lift rotor (2).

4. Method according to Claim 1,
**characterized in that** said first control of the supply of power (54") to said at least one electric motor (20) comprises a third power regulation relative to a driving power supplied by said at least one electric motor (20).

5. Method according to any one of Claims 1 to 4,
**characterized in that** said first control of the supply of power (54, 54', 54") to said at least one electric motor (20) is implemented automatically by a supervisor system (3).

6. Method according to any one of Claims 1 to 5,
**characterized in that** said first control of the supply of power (54, 54', 54") to said at least one electric motor (20) is implemented depending on a control setpoint transmitted by a control member (4) to a supervisor system (3'), said control member (4) allowing a pitch of blades (5) of said at least one lift rotor (2) to be controlled collectively.

7. Method according to any one of Claims 1 to 6,
**characterized in that** said first control of the supply of power (54, 54', 54") to said at least one electric motor (20) is triggered by a pilot selecting a predetermined mode, said selection being implemented by means of a first human-machine interface (6).

8. Method according to any one of Claims 1 to 7,
**characterized in that** said method (60) comprises a second test (61, 61') comprising the following steps:
• when said speed of rotation NR of the at least one lift rotor (2) is greater than or equal to said second threshold speed V2, second control of a supply of power (62) to said at least one electric motor (20), said second control of the supply of power (62) being configured to keep said speed of rotation NR of said at least one lift rotor (2) greater than or equal to said second threshold speed V2 for a second predetermined time period D2,
• calculating (63) an electrical power Pe supplied by said at least one electrical power source (21) to said at least one electric motor (20) during said second predetermined time period D2, and
• identifying (64) that said electrical power Pe is stable for the second predetermined time period D2, being between a lower predetermined threshold power Psinf and an upper predetermined threshold power Pssup.

9. Method according to Claim 8,
**characterized in that** said second test (61) is triggered by a pilot making a selection by means of a second human-machine interface (7).

10. Method according to Claim 8,
**characterized in that** said second test (61') is performed automatically after said first test (51).

11. Method according to any one of Claims 8 to 10,
**characterized in that** said second test (61, 61') is performed on the ground.

12. Method according to any one of Claims 8 to 10,
**characterized in that** said second test (61, 61') is performed during a flight phase of said aircraft (1).

13. Computer program configured to be implemented in a rotary-wing aircraft (1) comprising at least one lift rotor (2) and one hybrid power plant (10), said hybrid power plant (10) being configured to rotate said at least one lift rotor (2), said hybrid power plant (10) comprising:
• at least one heat engine (15) configured to rotate said at least one lift rotor (2), and
• at least one electric motor (20) supplied with electrical energy by at least one electrical power source (21), said at least one electric motor (20) being configured to rotate said at least one lift rotor (2) at least when at least one of said at least one heat engines (15) fails,
**characterized in that** said computer program comprises a sequence of instructions that can be carried out by a supervisor system (3, 3') connected to said hybrid power plant (10), said supervisor system (3, 3') implementing said method (50, 60) for testing said hybrid power plant (10) according to Claim 1.

14. Rotary-wing aircraft (1) comprising at least one lift rotor (2) and one hybrid power plant (10), said hybrid power plant (10) being configured to rotate said at least one lift rotor (2), said hybrid power plant (10) comprising:
• at least one heat engine (15) configured to rotate said at least one lift rotor (2), and
• at least one electric motor (20) supplied with electrical energy by at least one electrical power source (21), said at least one electric motor (20) being configured to rotate said at least one lift rotor (2) at least when at least one of said at least one heat engines (15) fails,
**characterized in that** said aircraft (1) comprises a supervisor system (3, 3') connected to said hybrid power plant (10), said supervisor system (3, 3') implementing said method (50, 60) for testing said hybrid power plant (10) according to Claim 1.
